# EUROPÄISCHE PATENTANMELDUNG

(11) **EP 1 519 079 A2**
(43) Veröffentlichungstag der Anmeldung: **30.03.2005**
(21) Anmeldenummer: 04022272.1
(22) Anmeldetag: 18.09.2004
(51) Int. Cl.: F16H 57/00

(54) **Verfahren zum Vermindern von einem Kegelscheibenumschlungsgetriebe ausgehenden Schwingungen sowie Kegelscheibenumschlingungsgetriebe und Welle**

(30) Priorität: 27.09.2003 DE 10344934
(71) Anmelder: LuK Lamellen und Kupplungsbau Beteiligungs KG, 77815 Bühl (DE)
(72) Erfinder: Mohr, Carsten, Dr., 77830 Bühlertal (DE); Fidlin, Alexander, Dr., 76149 Karlsruhe (DE); Wodtke, Hans-Walter, Dr., 58791 Werdohl (DE)

(57) **Zusammenfassung**

Ein Kegelscheibenumschlingungsgetriebe enthält eine Eingangswelle (8) mit einem Kegelscheibenpaar (12,14), welche Eingangswelle (8) in axial beabstandeten , auf je einer Seite des Kegelscheibenpaars angeordneten Lagern (26,28) gelagert ist, eine in radialem Abstand von der Eingangswelle (8) und parallel zu dieser angeordnete Ausgangswelle (10) mit einem Kegelscheibenpaar (12,14), welche Abtriebswelle in axial beabstandeten, auf je einer Seite des Kegelscheibenpaars angeordneten Lagern (26,28) gelagert ist, und ein die Kegelscheibenpaare umschlingendes Umschlingungsmittel (22). Die Auslegung der Wellen (8,10) und Lager (26,28) ist derart, dass bezüglich zumindest einer Eigenfrequenz wenigstens einer der Wellen (8,10) deren Schwingungsknoten zumindest in der Nähe eines der Lager (26,28) ist. Alternativ oder zusätzlich enthält wenigstens eine der Wellen (8,10) einen Tilger zur Minderung der Amplitude der Schwingungen der Welle.

## Beschreibung

Die Erfindung betrifft ein Verfahren zum Vermindern von von einem Kegelscheibenumschlingungsgetriebe ausgehenden Schwingungen. Die Erfindung betrifft weiter ein Kegelscheibenumschlingungsgetriebe sowie eine Welle für ein solches Getriebe.

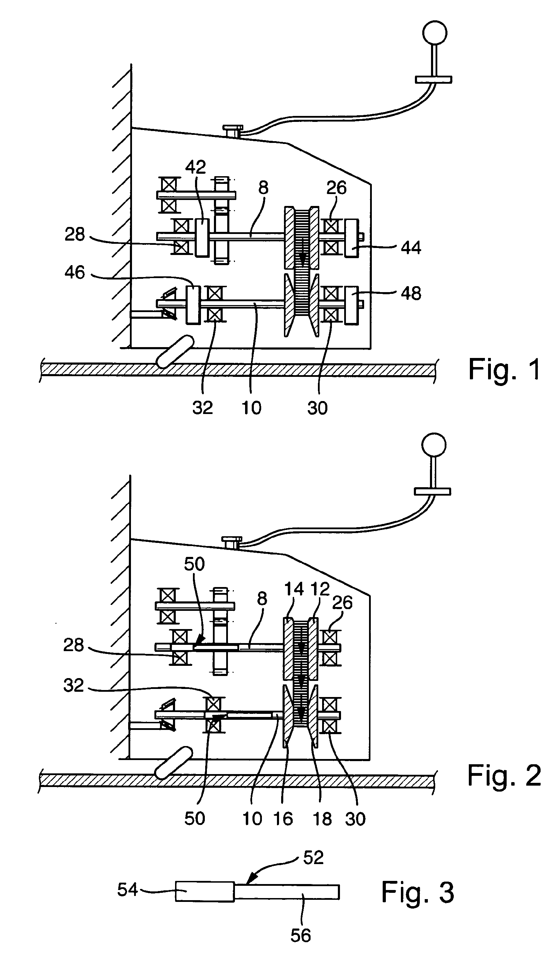

Getriebe, die eine kontinuierliche Verstellung der Übersetzung ermöglichen, insbesondere Kegelscheibenumschlingungsgetriebe, finden zunehmend Verwendung in Kraftfahrzeugen, da sie einen hohen Schaltkomfort mit geringem Verbrauch vereinen. Ein solches Getriebe ist beispielhaft in Fig. 3 dargestellt.

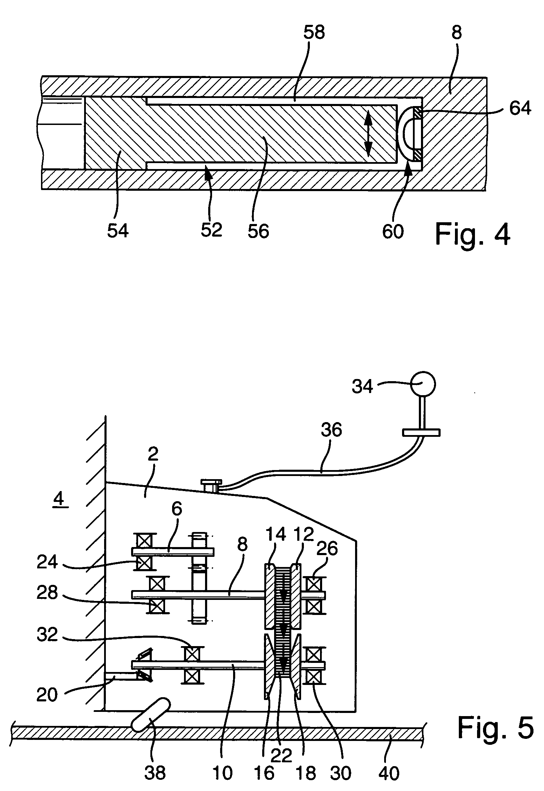

Gemäß Fig. 5 weist ein Kegelscheibenumschlingungsgetriebe ein Gehäuse 2 auf, in dem eine von einem Motor angetriebene Vorgelegewelle 6, eine Eingangswelle 8 und eine Ausgangswelle 10 gelagert sind.

Die von der Vorgelegewelle 6 angetriebene Eingangswelle 8 ist einteilig mit einer Kegelscheibe 12 ausgebildet und trägt eine weitere Kegelscheibe 14, die mit der Eingangswelle 8 drehfest, jedoch axial verschiebbar verbunden ist. Die Ausgangswelle 10 ist einteilig mit einer Kegelscheibe 16 ausgebildet und trägt eine Kegelscheibe 18, die drehfest und axial verschiebbar mit der Ausgangswelle 6 verbunden ist. Die Ausgangswelle 10 treibt ein über ein Differential mit Fahrzeugrädern verbundenes Zahnrad 20 an.

Die Kegelscheiben 12 und 14 sowie 16 und 18 bilden jeweils ein Kegelscheibenpaar mit einander zugewandten Kegelflächen, um die ein Umschlingungsmittel 22, beispielsweise eine aus Wiegedruckstücken und Laschen zusammengesetzte Kette, umläuft, die über einen Reibeingriff mit den Kegelflächen eine Drehmomentübertragung zwischen den Kegelscheibenpaaren ermöglicht. Durch gegensinnige Verstellung des Abstandes zwischen den Kegelscheiben der Kegelscheibenpaare kann die Übersetzung des Getriebes stufenlos verstellt werden.

Die Vorgelegewelle 6 ist in einem Lager 24 gelagert. Die Eingangswelle 8 ist außerhalb des Kegelscheibenpaars 12, 14 in einem Lager 26, beispielsweise einem Kugellager, und einem weiteren Lager 28, beispielsweise Rollenlager, im Gehäuse 2 gelagert. Die Ausgangswelle 10 ist außerhalb des Kegelscheibenpaares 16, 18 in einem Lager 30, beispielsweise einem Schrägrollenlager, und in einem weiteren Lager 32, beispielsweise ebenfalls ein Schrägrollenlager, gelagert. Zur Betätigung verschiedener Betriebsarten des Getriebes dient ein Wählhebel 34, der mit dem Getriebe beispielsweise über einen Seilzug 36 verbunden ist. Das mit dem Motor 4 verblockte Gehäuse 2 stützt sich über ein Stützlager 38 an einem Fahrzeugchassis 40 ab.

Aufbau und Funktion des bisher beispielhaft beschriebenen Kegelscheibenumschlingungsgetriebes sind an sich bekannt und werden daher nicht im einzelnen erläutert.

Insbesondere die Eingangswelle 8 und die Ausgangswelle 10 können in unterschiedlichster Weise zu Schwingungen, insbesondere Biegeschwingungen, angeregt werden. Diese Schwingungsanregungen können beispielsweise durch Änderungen des über das Umschlingungsmittel 22 übertragenen Drehmoments, durch Änderungen des vom Motor her auf die Eingangswelle 8 übertragenen Drehmoments oder auch durch Kräfte bedingt sein, die abtriebsseitig vom Fahrzeug her in die Ausgangswelle 10 eingeleitet werden. Die Schwingungsanregung kann insbesondere auch durch die beim Ein- bzw. Auslaufen der Kette in die bzw. aus den Scheibensätzen entstehenden Impulse infolge der Anlage der Wiegedruckstücke an den Kegelflächen erfolgen. Je weiter solche schwingungsanregenden Kräfte von einer Lagerstelle entfernt in die Antriebswelle bzw. Abtriebswelle eingeleitet werden, um so größer ist im allgemeinen die Schwingungsanregung. Die Wellen 8 und 10 haben, wie für Wellen allgemein bekannt, mehrere Eigenfrequenzen bzw. Schwingungsmoden, wobei im Bereich der niedrigsten Eigenfrequenzen meistens die Biegemoden niedriger Ordnungen liegen.

Bei diesen Biegemoden, beispielsweise 1., 2. oder 3. Ordnung, existieren Bereiche, in denen die Biegeauslenkung maximale Werte annimmt (Schwingungsbäuche), zwischen denen Bereiche minimaler Auslenkungen (Schwingungsknoten) liegen.

Der Erfindung liegt die Aufgabe zugrunde, Schwingungen, die von einem solchen Kegelscheibenumschlingungsgetriebe ausgehen und in einem Fahrzeug oder außerhalb eines Fahrzeugs als Körperschall und/oder Luftschall vernehmbar sind, zu vermindern.

Eine erste Lösung dieser Aufgabe wird mit einem Verfahren zum Vermindern von von einem Kegelscheibenumschlingungsgetriebe ausgehenden Schwingungen erzielt, welches Kegelscheibenumschlingungsgetriebe enthält eine Eingangswelle mit einem Kegelscheibenpaar, welche Eingangswelle in axial beabstandeten, auf je einer Seite des Kegelscheibenpaars angeordneten Lagern gelagert ist, eine in radialem Abstand von der Eingangswelle und parallel zu dieser angeordneten Ausgangswelle mit einem Kegelscheibenpaar, welche Ausgangswelle in axial beabstandeten, auf je einer Seite des Kegelscheibenpaars angeordneten Lagern gelagert ist, und ein die Kegelscheibenpaare umschlingendes Umschlingungsmittel, bei welchem Verfahren bei wenigstens einer der Wellen die Lage der Schwingungsknoten bei wenigstens einer Eigenfrequenz ermittelt wird und die Welle und/oder wenigstens eines der Lager derart verändert wird, dass bei wenigstens einer Eigenfrequenz der Welle deren Schwingungsknoten sich zumindest in der Nähe eines der Lager befindet.

Mit diesem erfindungsgemäßen Verfahren werden die durch Schwingungen der die Kegelscheibenpaare tragenden Wellen bedingten Körperschallanregungen, die in das Getriebegehäuse oder in das Fahrzeug weitergeleitet werden, vermindert, so dass der Schwingungs- bzw. Akustikkomfort im Fahrzeuginnenraum verbessert ist.

Vorteihafterweise wird der Schwingungsknoten durch zweckentsprechende Wahl der Massen- und/oder Steifigkeitsverteilung der jeweiligen Welle in der Nähe eines Lagers angeordnet.

Alternativ oder zusätzlich wird der Schwingungsknoten durch zweckentsprechende Wahl der Steifigkeit wenigstens eines Lagers der jeweiligen Welle in der Nähe eines Lagers angeordnet.

Alternativ oder zusätzlich kann der Schwingungsknoten durch zweckentsprechende Wahl des Ortes wenigstens eines der Lager der jeweiligen Welle in der Nähe des Lagers angeordnet werden.

Eine weitere Lösung der Erfindungsaufgabe wird mit einem Verfahren zum Vermindern von von einem Kegelscheibenumschlingungsgetriebe ausgehenden Schwingungen erzielt, welches Kegelscheibenumschlingungsgetriebe enthält eine Eingangswelle mit einem Kegelscheibenpaar, welche Eingangswelle in axial beabstandeten, auf je einer Seite des Kegelscheibenpaars angeordneten Lagern gelagert ist, eine in radialem Abstand von der Eingangswelle und parallel zu dieser angeordneten Ausgangswelle mit einem Kegelscheibenpaar, welche Ausgangswelle in axial beabstandeten, auf je einer Seite des Kegelscheibenpaars angeordneten Lagern gelagert ist, und ein die Kegelscheibenpaare umschlingendes Umschlingungsmittel, bei welchem Verfahren die Amplitude einer Biegelinie wenigstens einer der schwingenden Wellen ermittelt wird und wenigstens eine der Wellen derart verändert wird, dass sich die Amplitude ihrer Biegelinie vermindert.

Vorteilhafterweise wird die Amplitude durch einen in die Welle integrierten Tilger vermindert.

Eine weitere Lösung der Erfindungsaufgabe wird mit einem Kegelscheibenumschlingungsgetriebe erzielt, das enthält eine Antriebswelle mit einem Kegelscheibenpaar, welche Antriebswelle in axial beabstandeten , auf je einer Seite des Kegelscheibenpaars angeordneten Lagern gelagert ist, eine in radialem Abstand von der Antriebswelle und parallel zu dieser angeordneten Abtriebswelle mit einem Kegelscheibenpaar, welche Abtriebswelle in axial beabstandeten, auf je einer Seite des Kegelscheibenpaars angeordneten Lagern gelagert ist, und ein die Kegelscheibenpaare umschlingendes Umschlingungsmittel, wobei die Auslegung derart ist, dass bezüglich zumindest einer Eigenfrequenz wenigstens einer der Wellen deren Schwingungsknoten zumindest in der Nähe eines der Lager ist.

Wenn zumindest eine der Wellen über eines der zugehörigen Lager in axialer Richtung hinausragt, ist der Schwingungsknoten vorteilhafterweise durch Veränderung der Masse des über das Lager hinausragenden Teils der Welle in die Nähe eines zugehörigen Lagers verschoben.

Eine weitere Lösung der Erfindungsaufgabe wird mit einem Kegelscheibenumschlingungsgetriebe erzielt, das enthält eine Eingangswelle mit einem Kegelscheibenpaar, welche Eingangswelle in axial beabstandeten , auf je einer Seite des Kegelscheibenpaars angeordneten Lagern gelagert ist, eine in radialem Abstand von der Eingangswelle und parallel zu dieser angeordnete Ausgangswelle mit einem Kegelscheibenpaar, welche Ausgangswelle in axial beabstandeten, auf je einer Seite des Kegelscheibenpaars angeordneten Lagern gelagert ist, und ein die Kegelscheibenpaare umschlingendes Umschlingungsmittel, wobei eine Vorrichtung zum Vermindern der Amplitude einer Biegelinie wenigstens einer der schwingenden Wellen vorgesehen ist.

Vorteilhafterweise wird die Vorrichtung zum Vermindern der Amplitude einer Biegelinie durch einen in die Welle integrierten Biegeschwingungstilger gebildet.

Das Kegelscheibenumschlingungsgetriebe ist bevorzugt derart ausgebildet, dass jeweils eine Kegelscheibe des mit der Eingangswelle bzw. der Ausgangswelle verbundenen Kegelscheibenpaares starr mit der jeweiligen Welle verbunden ist und die andere Kegelscheibe drehfest und axial verschiebbar mit der jeweiligen Welle verbunden ist.

Eine weitere Lösung der Erfindungsaufgabe wird mit einer Welle für ein Kegelscheibenumschlingungsgetriebe erzielt, die einen Hohlraum enthält, in den ein koaxial zur Welle verlaufender, an ihr befestigter Biegestab einragt.

Vorteilhafterweise ist eine Dämpfungseinrichtung zur Dämpfung einer Schwingung des Biegestabs vorgesehen.

Die Erfindung wird im Folgenden anhand schematischer Zeichnungen beispielsweise und mit weiteren Einzelheiten erläutert.

In den Fig. stellen dar:
- Fig. 1: eine Prinzipansicht eines Kegelscheibenumschlingungsgetriebe mit an Wellen befestigten Zusatzmassen,
- Fig. 2: eine Ansicht ähnlich der Fig. 1 mit in die Welle integrierten Biegeschwingungstilgern,
- Fig. 3: eine Seitenansicht eines Tilgerstabes,
- Fig. 4: einen Biegeschwingungstilger mit Dämpfung, und
- Fig. 5: eine schematische Ansicht eines herkömmlichen Kegelscheibenumschlingungsgetriebes.

Wie eingangs erläutert, werden bei einem Kegelscheibenumschlingungsgetriebe der in Fig. 3 beispielhaft dargestellten Art die Eingangswelle 8 und die Ausgangswelle 10 zu Biegeschwingungen angeregt. Die Frequenzen dieser Schwingungen, insbesondere der durch das Auftreffen der Wiegedruckstücke der Umschlingungskette 22 auf die Kegelflächen der Kegelscheiben verursachten Schwingungen, können im hörbaren Frequenzbereich liegen und werden unmittelbar vom Gehäuse 2 als Luftschall abgestrahlt und/oder über das Stützlager 38 in das Fahrzeug übertragen und werden dort als Luftschall hörbar.

Erfindungsgemäß werden die Geometrie, die Massen- und Steifigkeitsverteilung und die Lagerstellen der Scheibensatz-Wellen so gewählt, dass die Schwingungsknoten mindestens einer akustisch oder für den Innenraumkomfort eines Fahrzeugs relevanten Schwingungsmode möglichst in, zumindest aber möglichst nahe an demjenigen der Lager 26, 28, 30 und 32 zu liegen kommt, von dem aus eine für die Schwingungsübertragung in den Fahrzeuginnenraum maßgebliche Wirkung ausgeht. Auf diese Weise wird die Auslenkung und damit die Schwingungsbeschleunigung an diesem Lager für die Frequenz der betreffenden Mode minimal, so dass die Ursache für eine Einleitung von Schwingungen in das Getriebegehäuse 2 und von dort über dessen Stützlager 38 und die Lagerung des mit dem Getriebe verblockten Motors in das Fahrzeug ebenso wie die Luftschallabstrahlung durch das Gehäuse minimiert ist.

Es versteht sich, dass die vorstehenden Auslegungskriterien vorteilhafterweise bei Neukonstruktionen eines Getriebes berücksichtigt werden, wobei die geometrischen Freiheitsgrade i. A. beschränkt sind. Bei vorhandenen Getrieben oder bei Getrieben, deren grundlegende Auslegungsparameter und Lagerstellen bereits festgelegt sind, können die Schwingungsknoten beispielsweise durch gezielte Steifigkeitsänderungen der jeweiligen Welle (Hohlbohren, Durchmesserreduzierung oder Steigerung, Auswahl des Materials usw.) oder auch durch Änderung der Massenverteilung, wie z.B. einer Verlängerung der Welle, dem Anbringen von Zusatzmassen oder von Massenreduzierung an geeigneten Stellen, derart beeinflusst werden, dass ein Schwingungsknoten möglichst nahe an einem der Lager zu liegen kommt. Es versteht sich, dass es besonders vorteilhaft ist, wenn für den Schwingungskomfort im Fahrzeuginnenraum besonders relevanten Schwingungsmoden derart ausgebildet sind, dass im Bereich der Lager jeweils ein Schwingungsknoten liegt. Für die Verschiebung eines oder der Schwingungsknoten in die Nähe der Lager kann das Anbringen einer Zusatzmasse außerhalb des Raums zwischen beiden Lagerstellen besonders vorteilhaft sein, weil solche Zusatzmassen die Funktion von Schwingungstilgern übernehmen können. Wenn möglich, kann auch das Lager zum Schwingungsknoten verschoben werden.

Anhand der Fig. 1, die insgesamt der Fig. 3 entspricht, in der jedoch der besseren Übersichtlichkeit halber nur die zur Erläuterung der Erfindung erforderlichen Bezugszeichen eingefügt sind, wird beispielhaft das Anbringen von Zusatzmassen beschrieben. An der Eingangswelle 8 ist eine Zusatzmasse 42 gemäß der Fig. rechtsseitig des Lagers 28, also insgesamt zwischen den beiden Lagern 26 und 28 der Eingangswelle 8 angebracht. Eine weitere Zusatzmasse 44 ist an einer Verlängerung der Ausgangswelle 8 angebracht, die durch das Lager 26 hindurchragt. Eines der Lager der Wellen ist vorteilhafterweise möglichst nah an den Kegelscheiben angeordnet. An der Ausgangswelle 10 sind Zusatzmassen 46 und 48 jeweils außerhalb der Lager 32 bzw. 30 angebracht.

Es versteht sich, das nicht alle Zusatzmassen vorhanden sein müssen, sondern je nach Erfordernissen nur eine oder mehrere Zusatzmassen vorhanden sein müssen, um den Schwingungsknoten einer für den Akustikkomfort relevanten Biegelinie bzw. Biegeschwingung der Wellen möglichst nah zu oder an ein Lager oder ganz in ein Lager zu verschieben. Anstelle von Zusatzmassen, die auch durch bloße Durchmesserverdickung der Wellen bewirkt werden können, können erforderlichenfalls Gewichtsverminderungen (durch entsprechende Bohrungen) und/oder Durchmesserverminderungen) vorgesehen werden. Auch durch lokale oder gesamthafte Steifigkeitsveränderungen der Wellen und/oder der Lager (axiale Erstreckung der Lager, Anbindung der Lager an das Gehäuse usw.) können die Knoten einer relevanten Biegelinie (Eigenfrequenz(en) der Wellen) zu den oder in die Lager verlegt werden. Durch Beeinflussung der Lagersteifigkeit lässt sich die Modenform der Biegelinie naturgemäß nicht stark verändern, da beispielsweise die Anzahl der Knoten im Allgemeinen gleich bleibt. Die Position der Knoten lässt sich jedoch in einem bestimmten Ausmaß verschieben.

Die Zusatzmassen, insbesondere die außerhalb der Lager, z.B. an einem verlängerten Ende der Welle angebrachten Zusatzmassen (beispielsweise Zusatzmasse 44) müssen nicht vollständig starr mit der jeweiligen Welle verbunden sein, sondern können mit einer vorgegebenen Steifigkeit, beispielsweise über ein verformbares, ringförmiges Zwischenelement mit der Welle verbunden sein, so dass sie nicht nur als Zusatzmasse, sondern auch als Schwingungstilger wirken, der die Amplitude der Schwingung dämpft.

Eine weitere Möglichkeit, die Anregung von für den Komfort, insbesondere Akustikkomfort, nachteiligen Schwingungen des Kegelscheibenumschlingungsgetriebes zu mindern, liegt darin, nicht primär die Schwingungsknoten in ein Lager zu verschieben, sondern primär die Schwingungsamplitude zu beeinflussen. Eine Möglichkeit dazu wird anhand der Fig. 2 und 3 erläutert.

Gemäß Fig. 2 sind in die Eingangswelle 8 und die Ausgangswelle 10 je ein Biegeschwingungstilger 50 integriert, der in Fig. 3 in vergrößertem Maßstab dargestellt ist. Der Biegeschwingungstilger ist durch einen Stab 52 gebildet, der ein im Durchmesser verdicktes Ende 54 und einen Schaft 56 aufweist. Der Stab ist mit seinem verdickten Ende 54 unter Pressung in einer Hohlbohrung in der jeweiligen Welle aufgenommen, so dass das fest in der Welle aufgenommene Ende 54 eine Verankerung für den Schaft 56 bildet, der innerhalb des Hohlraums bzw. der Hohlbohrung schwingen kann. Beispielsweise liegt der Durchmesser des beispielsweise metallischen Stabs im Bereich eines verdickten Endes 54 bei 20 mm, der Durchmesser des Schafts 56 beträgt beispielsweise etwa 19,5 mm und die Länge des Schafts beträgt je nach Abstimm-Frequenz 70 bis 80 mm. Die Gesamtlänge des Stabs liegt bei 120 mm. Ein solcher Tilgerstab besitzt für seine erste Biegemode, d.h. die Grundschwingung seiner Biegung eine Resonanzfrequenz, die durch die Materialwerte (Steifigkeit und Masse) sowie die Länge des Schafts bestimmt ist. Die Resonanz des frei schwingenden Schaftes, die durch das an geeigneter Stelle der Welle starr mit der Welle verbundene verdickte Ende 54 des Stabes 52 angeregt wird, ist auf die Frequenz der zu bekämpfenden Biegeschwingung der Welle abgestimmt, so dass eine Massenkraftkompensation erfolgt und damit die Biegeschwingung der Welle bei der jeweiligen Resonanzfrequenz vermindert wird. Die gegenphasig zu der Welle schwingende Masse des Stabes kann erheblich kleiner als die dynamische Masse der zu bekämpfenden Resonanz sein, beispielsweise im Bereich zwischen 3 bis 10 % dieser dynamischen Masse liegen.

Die Wirksamkeit des durch den Stab 52 gebildeten Biegeschwingungstilgers kann erhöht werden, indem der Biegeschwingungstilger zusätzlich mit einer Dämpfungseinrichtung versehen wird, wie sie beispielsweise anhand der Fig. 4 beschrieben wird. In Fig. 4 ist der in einem Hohlraum 58 der Welle, beispielsweise der Eingangswelle, mit seinem verdickten Ende 54 starr gehaltener Stab 52 dargestellt, dessen Schaft 56 in dem Hohlraum in Richtung des Doppelpfeils schwingen kann. Zur Dämpfung der Schwingung des Schafts 56 ist eine Dämpfungseinrichtung 60 vorgesehen, die im dargestellten Beispiel durch eine an der Stirnfläche des Schafts 56 starr befestigte Tellerfeder 62 gebildet ist; an deren freiem Ende ein Ring 64 befestigt ist, der gegen eine Stirnfläche des Hohlraums 54 der Welle vorgespannt ist. Wenn der Schaft 56 relativ zur Welle 54 schwingt, bewegt sich der Ring 64 längs der Stirnfläche des Hohlraums der Welle, so dass die Schwingung durch Coulomb'sche, d.h. trockene, Reibung gedämpft ist. Es versteht sich, dass der Ring aus speziellem Reibmaterial bestehen kann oder mit einem Reibbelag beschichtet sein kann. Des weiteren kann anstelle des Rings auch eine Scheibe vorgesehen sein.

Es sind auch andere Dämpfungseinrichtungen möglich, mit denen die Schwingung des Schafts 56 gedämpft werden kann, beispielsweise dadurch, dass der Hohlraum 58 mit einem Fluid, einem Fett oder ähnlichem gefüllt wird usw. In Weiterentwicklungen kann die Dämpfung durch Veränderung der Federvorspannung, des Fluiddruckes usw. verändert und an den jeweiligen Bedarf angepasst werden. Eine Dämpfung kann auch dadurch erfolgen, dass das Schaftmaterial gezielt mit hoher Hysterese ausgebildet wird.

Während bei der Ausführungsform gemäß Fig. 1 die schädlichen Wirkungen der Schwingungen der Wellen 8 oder 10 in erster Linie durch Beeinflussung der Lage der Schwingungsknoten erfolgt, wird der schädlichen Wirkung der Schwingungen der Wellen 8 oder 10 bei der Ausführungsform gemäß Fig. 2 in erster Linie dadurch entgegengewirkt, dass die Amplituden dieser Schwingungen der Wellen vermindert werden. Eine Welle mit integriertem Biegeschwingungstilger kann auch in anderen Anwendungsgebieten eingesetzt werden, wo Wellenschwingungen gemindert werden sollen.

Zusammenfassend macht sich die Erfindung die Erkenntnis zu Nutzen, dass für jede betrachtete Eigenfrequenz die real auftretende Schwingungsform (Mode) und somit die Verteilung der Schwingungsbäuche und der Schwingungsknoten u. a. von der Massen- und Steifigkeitsverteilung der Welle sowie von der Lagerstelle, der Steifigkeit der Lagerung und der Steifigkeit des Gehäuses abhängt. Durch rechnerische Simulation und/oder durch Versuche auf einem Prüfstand ist es möglich, durch Veränderung der Steifigkeit und/oder der Masseverteilung der Wellen und/oder durch Verschiebung der Lagerstellen und/oder durch die Verwendung von Tilgern das Getriebe derart auszulegen, dass bei für den Schwingungskomfort im Fahrzeuginnenraum relevante Frequenzen die Schwingungsmoden der Wellen derart sind, dass zumindest einer ihrer Schwingungsknoten im Bereich einer für den Schwingungskomfort maßgeblichen Lagerstelle liegt.

### Bezugszeichenliste

- 2: Gehäuse
- 4: Motor
- 6: Vorgelegewelle
- 8: Eingangswelle
- 10: Ausgangswelle
- 12: Kegelscheibe
- 14: Kegelscheibe
- 16: Kegelscheibe
- 18: Kegelscheibe
- 20: Zahnrad
- 22: Umschlingungsmittel
- 24: Lager
- 26: Lager
- 28: Lager
- 30: Lager
- 32: Lager
- 34: Wählhebel
- 36: Seilzug
- 38: Stützlager
- 40: Fahrzeugchassis
- 42: Zusatzmasse
- 44: Zusatzmasse
- 46: Zusatzmasse
- 48: Zusatzmasse
- 50: Biegeschwingungstilger
- 52: Stab
- 54: verdicktes Ende
- 56: Schaft
- 58: Hohlraum
- 60: Dämpfungseinrichtung
- 62: Tellerfeder
- 64: Ring

## Patentansprüche

1. Verfahren zum Vermindem von von einem Kegelscheibenumschlingungsgetriebe ausgehenden Schwingungen, welches Kegelscheibenumschlingungsgetriebe enthält
eine Eingangswelle (8) mit einem Kegelscheibenpaar (12, 14), welche Eingangswelle in axial beabstandeten, auf je einer Seite des Kegelscheibenpaars angeordneten Lagern (26, 28) gelagert ist,
eine in radialem Abstand von der Eingangswelle und parallel zu dieser angeordneten Ausgangswelle (10) mit einem Kegelscheibenpaar (16, 18), welche Ausgangswelle in axial beabstandeten, auf je einer Seite des Kegelscheibenpaars angeordneten Lagern (30, 32) gelagert ist, und
ein die Kegelscheibenpaare umschlingendes Umschlingungsmittel (22),
bei welchem Verfahren bei wenigstens einer der Wellen die Lage der Schwingungsknoten bei wenigstens einer Eigenfrequenz ermittelt wird und die Welle und/oder wenigstens eines der Lager derart verändert wird, dass bei wenigstens einer Eigenfrequenz der Welle deren Schwingungsknoten sich zumindest in der Nähe eines der Lager befindet.

2. Verfahren nach Anspruch 1, wobei der Schwingungsknoten durch zweckentsprechende Wahl der Massen- und/oder Steifigkeitsverteilung der jeweiligen Welle in der Nähe eines Lagers angeordnet wird.

3. Verfahren nach Anspruch 1 oder 2, wobei der Schwingungsknoten durch zweckentsprechende Wahl der Steifigkeit wenigstens eines Lagers der jeweiligen Welle in der Nähe eines Lagers angeordnet wird.

4. Verfahren nach einem der Ansprüche 1 bis 3, wobei der Schwingungsknoten durch zweckentsprechende Wahl des Ortes wenigstens eines der Lager der jeweiligen Welle in der Nähe des Lagers angeordnet wird.

5. Verfahren zum Vermindern von von einem Kegelscheibenumschlingungsgetriebe ausgehenden Schwingungen, welches Kegelscheibenumschlingungsgetriebe enthält
eine Eingangswelle (8) mit einem Kegelscheibenpaar (12, 14), welche Eingangswelle in axial beabstandeten, auf je einer Seite des Kegelscheibenpaars angeordneten Lagern (26, 28) gelagert ist,
eine in radialem Abstand von der Eingangswelle und parallel zu dieser angeordneten Ausgangswelle (10) mit einem Kegelscheibenpaar (16, 18), welche Ausgangswelle in axial beabstandeten, auf je einer Seite des Kegelscheibenpaars angeordneten Lagern (30, 32) gelagert ist, und
ein die Kegelscheibenpaare umschlingendes Umschlingungsmittel (22),
bei welchem Verfahren die Amplitude einer Biegelinie wenigstens einer der schwingenden Wellen (8, 10) ermittelt wird und wenigstens eine der Wellen derart verändert wird, dass sich die Amplitude ihrer Biegelinie vermindert.

6. Verfahren nach Anspruch 5, wobei die Amplitude durch einen in die Welle integrierten Tilger vermindert wird.

7. Kegelscheibenumschlingungsgetriebe, enthaltend
eine Eingangswelle (8) mit einem Kegelscheibenpaar (12, 14), welche Eingangswelle in axial beabstandeten , auf je einer Seite des Kegelscheibenpaars angeordneten Lagern (26, 28) gelagert ist,
eine in radialem Abstand von der Eingangswelle und parallel zu dieser angeordnete Ausgangswelle (10) mit einem Kegelscheibenpaar (16, 18), welche Ausgangswelle in axial beabstandeten, auf je einer Seite des Kegelscheibenpaars angeordneten Lagern (30, 32) gelagert ist, und ein
die Kegelscheibenpaare umschlingendes Umschlingungsmittel (22),
wobei die Auslegung derart ist, dass bezüglich zumindest einer Eigenfrequenz wenigstens einer der Wellen deren Schwingungsknoten zumindest in der Nähe eines der Lager ist.

8. Kegelscheibenumschlingungsgetriebe nach Anspruch 7, wobei zumindest eine (8) der Wellen (8, 10) über eines der zugehörigen Lager (26, 28) in axialer Richtung hinausragt und der Schwingungsknoten durch Veränderung der Masse des über das Lager hinausragenden Teils der Welle in die Nähe eines der zugehörigen Lager verschoben ist.

9. Kegelscheibenumschlingungsgetriebe, enthaltend
eine Eingangswelle (8) mit einem Kegelscheibenpaar (12, 14), welche Eingangswelle in axial beabstandeten , auf je einer Seite des Kegelscheibenpaars angeordneten Lagern (26, 28) gelagert ist,
eine in radialem Abstand von der Eingangswelle und parallel zu dieser angeordnete Ausgangswelle (10) mit einem Kegelscheibenpaar (16, 18), welche Ausgangswelle in axial beabstandeten, auf je einer Seite des Kegelscheibenpaars angeordneten Lagern (30, 32) gelagert ist, und ein
die Kegelscheibenpaare umschlingendes Umschlingungsmittel (22),
wobei eine Vorrichtung (50) zum Vermindern der Amplitude einer Biegelinie wenigstens einer der schwingenden Wellen vorgesehen ist.

10. Kegelscheibenumschlingungsgetriebe nach Anspruch 9, wobei die Vorrichtung durch einen in die Welle integrierten Biegeschwingungstilger (50) gebildet ist.

11. Kegelscheibenumschlingungsgetriebe nach einem der Ansprüche 7 bis 10, wobei jeweils eine Kegelscheibe des mit der Eingangswelle (8) bzw. der Ausgangswelle (10) verbundenen Kegelscheibenpaares (12, 14; 16, 18) starr mit der jeweiligen Welle verbunden ist und die andere Kegelscheibe drehfest und axial verschiebbar mit der jeweiligen Welle verbunden ist.

12. Welle für ein Kegelscheibenumschlingungsgetriebe, enthaltend einen Hohlraum (58), in den ein koaxial zur Welle verlaufender, an dieser befestigter Biegestab (52) einragt.

13. Welle nach Anspruch 12, wobei ein Dämpfungseinrichtung (60) zur Dämpfung einer Schwingung des Biegestabs (52) vorgesehen ist.
